# EUROPEAN PATENT APPLICATION

(11) **EP 1 053 848 A2**
(43) Date of publication of application: **22.11.2000**
(21) Application number: 00106209.0
(22) Date of filing: 22.03.2000
(51) Int. Cl.: B29C 35/08, B29D 31/515, A43B 5/00, A43B 13/04, B29C 45/00

(54) **A method of producing products made of plastics material, particularly soles with so-called studs for sports footwear and products obtained with such a method**

(30) Priority: 19.05.1999 IT PD990108
(71) Applicant: Bauer Italia S.p.A., 31044 Montebelluna (Treviso) (IT)
(72) Inventor: Sartor, Leo, 31044 Montebelluna (TV) (IT)
(74) Representative: Cantaluppi, Stefano

(57) **Abstract**

A method of producing products made of plastics material based on a polymer selected from an ethylene vinyl carboxylate (EVC), polyethylene, an ethylene copolymer, or a mixture of polyethylene and ethylene copolymers is described and comprises a step for the production of a non-cross-linked semi-finished product by injection and moulding and a step for the exposure of the semi-finished product to an electron beam (beta radiation) of an intensity no less than 60 kgy in order to cross-link the polymer.

## Description

The present invention relates to a method of producing products made of plastics material according to the preamble to the main claim, and to products produced in accordance with the method.

The invention relates to the field of the production of particular technical products which are generally of variable thickness and which are required to have optimal performance in terms of abrasion resistance, flexibility even at low temperature, and fatigue strength.

A first example of such products is represented by soles for sports footwear, particularly soles with so-called studs of the type used in football boots.

During running, these soles are in fact subjected not only to continuous bending cycles, but also to violent shear forces due to running, jumping, side-stepping and stopping which, as well as causing considerable mechanical stress, also cause rapid wear, particularly of the studs.

The wear of the studs takes place so quickly that it sometimes becomes the deciding factor for replacement of the boots, even though other parts of the boots are still in good condition.

To overcome this disadvantage, these soles mainly have removable studs so that they can be replaced independently of the rest of the boot.

A second example is represented by special protection means such as knee-pads, wrist-guards, and elbow-guards and the like which are used in sports such as roller skating, roller skiing, motorcycling, off-road cycling, etc.

These protection means serve to protect some parts of the athlete's body which are particularly exposed in the event of a fall and the protection means therefore have to be highly abrasion-resistant but also light and flexible in order not to obstruct the athlete's movements and to be as comfortable as possible.

All of these products have been produced up to now by the injection and moulding of plastics materials based on particular families of "technopolymers", such as modified polyamides or polyurethanes, which conform best to the required mechanical characteristics.

However, these "technopolymers" have considerable disadvantages, amongst which is fairly high cost and weight.

In the most common field of the production of soles for footwear, other plastics materials which are considered inferior from the point of view of their mechanical characteristics but which are also less expensive than the "technopolymers" mentioned above are also known.

For example, it is known to use polymer mixtures based on ethylene vinyl carboxylates (EVCs) and, in particular, mixtures based on ethylene vinyl acetate (EVA) which are used amongst other things to produce soles having good flexibility and light weight at a low cost.

However, these soles have been found to have poor mechanical characteristics, particularly abrasion resistance.

This limitation, which is widely recognized in the field, renders these mixtures definitely unsuitable for the production of products of the type described above.

In other technological fields technical solutions have been developed for producing EVC-based materials which have improved mechanical characteristics.

This improvement is achieved by bringing about a certain degree of cross-linking between the polymer chains.

According to a first method proposed, this cross-linking is achieved by the reaction of radical-generating chemical substances such as, for example, peroxides, added to the polymer as appropriate.

However, the application of this method to production by injection and moulding has shown some considerable disadvantages both in terms of the homogeneity of the mechanical characteristics achieved, and in terms of the production process.

In fact, according to this method, the cross-linking reaction requires the polymer material to be left in the mould at high temperatures for several minutes, thus causing partial degradation of the polymer, an aesthetically unsatisfactory result as well as causing a considerable loss of time in the production process.

A second method of bringing about at least partial cross-linking of EVC-based polymers is known in the field of the production of films, for example, from Italian patent application MI96A000928 in the name of Polimeri Europa S.r.l.

In this document, a technique is proposed for producing EVC films with improved mechanical characteristics suitable for use as synthetic leathers or the like by exposure to ionizing radiation of an intensity of between 30 and 70 kgy (kilograys).

However, this method is described only in relation to a partial cross-linking of films produced by calendering or another known film-forming process and hence for products characterized by uniform and relatively small thickness.

In contrast, the technical products described above, particularly soles with studs, are generally characterized by a markedly non-homogeneous thickness and are normally produced by injection and moulding.

The technical problem upon which the present invention is based is that of providing a method of producing products made of injected plastics material, possibly of variable thickness, which have good characteristics of abrasion resistance, flexibility even at low temperature, light weight and fatigue strength, the method being designed to overcome the limitations described above with reference to the prior art mentioned.

This problem is solved by the present invention by means of a method of producing products made of plastics material, particularly soles with studs for sports footwear, according to the appended claims.

The characteristics and the advantages of the invention will become clearer from the following detailed description of some preferred embodiments thereof, described by way of non-limiting example, with reference to the appended drawings, in which:
Figure 1 is a perspective view of a football boot having a sole with studs, formed in accordance with the present invention, and
Figure 2 is a table comparing the mechanical characteristics of a sample formed in accordance with the present invention and some comparative samples.

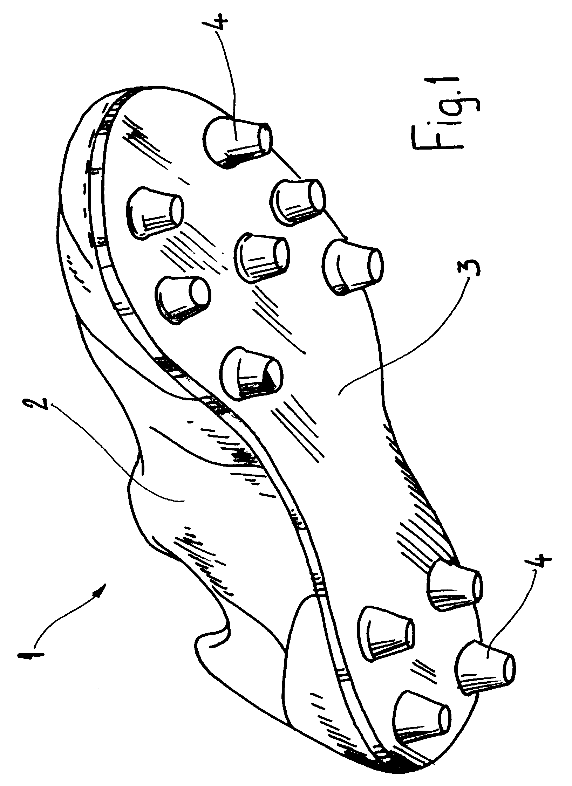

With reference to Figure 1, a football boot, generally indicated 1, comprises an upper 2 closed at the bottom by a sole 3 in which a plurality of studs, all indicated 4, are defined.

In a first preferred embodiment, the sole 3 is formed integrally with the studs 4 by a production method according to the present invention.

This method provides for a first processing step in which an EVC-based polymer mixture is injected and moulded in a mould cavity in order to produce therefrom a semi-finished product which already has the shape of the sole with studs 3 but which does not yet have the mechanical characteristics necessary for the purpose, since the EVC is not cross-linked.

The method according to the present invention therefore provides for a second processing step in which the semi-finished product is exposed to the action of an electron beam (beta radiation) of an intensity no less than 60 Kgy (kilograys).

As a result of this exposure, the polymer chains of the EVC undergo a cross-linking process which gives the sole with studs 3 the required mechanical characteristics.

The polymer mixture used is composed mainly of EVA, supplemented with additives conventionally used for polymer mixtures.

The intensity of the beta radiation to which the semi-finished product is exposed is between 70 and 100 kgy and is preferably 80 kgy. Tests carried out with radiation of greater intensity, for example 120 kgy, showed that too much cross-linking of the polymer causes an increase in the fragility of the product, to the detriment of its mechanical characteristics.

The sole 3 thus produced has mechanical characteristics such as to render it not only merely comparable with a sole produced from a mixture based on a "technopolymer" of the type commonly used for this application, but even better, as will be explained below.

According to a first variant of this embodiment, the non-cross-linked semi-finished product is produced by over-moulding onto a first intermediate product which in turn is formed by injection and moulding of a similar EVC-based polymer mixture.

In a second variant adopted, the intermediate product undergoes a first treatment to cross-link the EVC by exposure to beta radiation before the over-moulding.

The product produced upon completion of this method has the characteristic of having portions with different degrees of cross-linking and consequently also with different mechanical properties.

It is thus possible to produce a product with mechanical characteristics which are differentiated in each portion of the product according to their specific use.

A first example of a product according to this latter variant of the method of the present invention is represented by a sole with studs for football boots in which the studs have high abrasion resistance resulting from a high degree of cross-linking induced in the EVC, and in which the sole is more flexible by virtue of a lesser degree of cross-linking.

A second example is represented by a sports shoe in which the upper is also made of EVC by over-moulding onto the sole. In this case also, subsequent cross-linking enables differentiated mechanical characteristics to be produced in the various regions of the shoe, at the same time achieving the notable result of making a shoe of a single, inexpensive material, with advantageous effects on production costs.

If it is preferred to fit the sole onto the upper by gluing and if one or both components have been produced by the method according to the invention, it is necessary to provide for the interposition of an interface layer made, for example, of fabric or "non-woven fabric", between the two surfaces to be fitted together. The purpose of this step is to make up for the reduction in the adhesiveness of the components resulting from the exposure to the beta radiation. This interface layer may advantageously be applied beforehand to the opposite surfaces of a mid sole interposed between the sole and the upper, in known manner.

Other examples of the application of the present invention are constituted by wrist-guards, elbow-guards, knee-pads and other protection means for sports.

A further application is constituted by inserts made of plastics material by a method according to the present invention and used in products which may generally be made of another material. An example of this application is represented by the regions with accentuated flexibility in Telemark ski-boots.

Although the preferred embodiment of the invention provides for EVC-based polymer mixtures to be exposed to beta radiation, as described in the following example, the teaching upon which the present invention is based also extends to other polymers which can be cross-linked by exposure to beta radiation. Amongst these polymers polyethylene, particularly low-density and very low-density polyethylene, ethylene copolymers such as EPDM (ethylene-propylene-diene monomer) rubbers and mixtures of polyethylene and its copolymers may be mentioned.

### Example 1

A first series of samples made of polyurethane (PU) in accordance with a formulation typically used for the production of soles with studs was produced.

A second and a third series of samples made of EVA and geometrically identical to the first, were produced in parallel.

After moulding, the third set of samples was exposed to beta radiation having an intensity of 80 kgy, by a method according to the present invention.

Measurements of specific weight and abrasion resistance were performed on the samples and they were also subjected to fatigue strength tests.

Abrasion resistance was determined by measuring the loss of volume of a sample of standard shape subjected to abrasion in accordance with the DIN 53516 standard. The fatigue strength test was carried out by a method which is well-established in the footwear field and which consists in subjecting the sample to a series of bending cycles with the use of a Ross flexometer at a temperature of -6°C. The test was considered to have been passed if the sample had no breaks or cracks after one hundred thousand bending cycles.

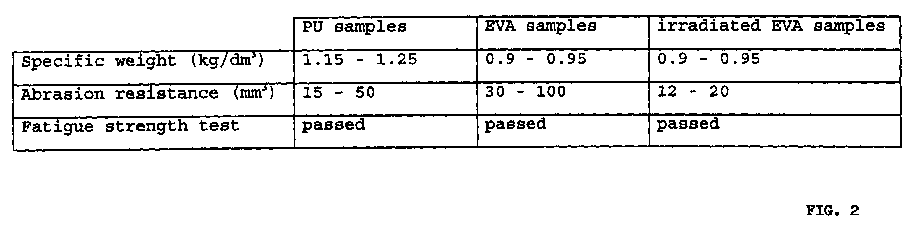

The results of the tests are given in the table of Figure 2, in which the maximum and minimum values relating to each series of samples are quoted for each test.

It is clear from an analysis of the table of Figure 2 that, unexpectedly, the method proposed by the invention produces EVA products which show even better abrasion resistance characteristics than the same products made of a "technopolymer" of the type commonly used for the production of soles with studs.

## Claims

1. A method of producing products made of plastics material based on a polymer selected from an ethylene vinyl carboxylate (EVC), polyethylene, an ethylene copolymer, or a mixture of polyethylene and ethylene copolymers, comprising a step of producing a non-cross-linked semi-finished product by the injection and moulding of a polymer mixture based on the polymer, in a mould cavity, in which a step is provided for the exposure of the semi-finished product to the action of an electron beam (beta radiation) of an intensity no less than 60 kgy in order to cross-link the mixture.

2. A method according to Claim 1, in which the semi-finished product is produced by over-moulding onto an intermediate product, the intermediate product being produced by injection and moulding of the polymer mixture.

3. A method according to Claim 2, in which the intermediate product is exposed to beta radiation for at least partial cross-linking of the mixture before the over-moulding.

4. A method according to one or more of the preceding claims, in which the polymer mixture is based on EVA.

5. A method according to one or more of the preceding claims, in which the beta radiation has an intensity of between 70 and 100 kgy and preferably 80 kgy.

6. A method according to one or more of the preceding claims, in which regions of different thickness are defined in the product.

7. A method according to one or more of the preceding claims, in which the product constitutes the sole of sports footwear (1), or constitutes the sole (3) and the upper (2) of sports footwear (1).

8. A method according to Claim 7, in which the sole (3) comprises a plurality of studs (4) formed integrally therewith.

9. A method according to any one of the preceding claims, in which there is provision for the interposition of an interface layer between components of the product so as to permit a subsequent gluing operation between the components.

10. A product made of plastics material, particularly a sole (3) for sports footwear (1), produced in accordance with the method of one or more of the preceding claims.

11. A product comprising at least one portion made of a plastics material generally different from the material of which the product is made, the at least one portion being produced in accordance with the method of one or more of Claims 1 to 9.

12. Sports footwear (1) comprising a sole (3) and an upper (2), in which the sole (3) is produced in accordance with one or more of the preceding claims.

13. Sports footwear according to Claim 12, in which the upper (2) and the sole (3) are produced in accordance with one or more of the preceding claims.

14. Sports footwear according to Claim 12, particularly football boots (1), in which the sole (3) is a sole with studs (4).
